Europäisches Patentamt

European Patent Office

Office européen des brevets

(19)

(11) Veröffentlichungsnummer : **0 129 792**
**B1**

# (12) EUROPÄISCHE PATENTSCHRIFT

(45) Veröffentlichungstag der Patentschrift :
10.09.86

(21) Anmeldenummer : 84106849.7

(22) Anmeldetag : 15.06.84

(51) Int. Cl.⁴ : **B 60 J  3/00**

(54) Sonnenblende für Fahrzeuge.

(30) Priorität : 24.06.83 DE 3322733

(43) Veröffentlichungstag der Anmeldung :
02.01.85 Patentblatt 85/01

(45) Bekanntmachung des Hinweises auf die Patenterteilung : 10.09.86 Patentblatt 86/37

(84) Benannte Vertragsstaaten :
DE FR IT SE

(56) Entgegenhaltungen :
FR-A- 2 318 046
FR-A- 2 429 686

(73) Patentinhaber : Gebr. Happich GmbH
Postfach 10 02 49 Clausenbrücke 1
D-5600 Wuppertal 1 (DE)

(72) Erfinder : Dietz, Günter
Eggenbruch 97
D-5600 Wuppertal 1 (DE)
Erfinder : Nowak, Manfred
Hasselstrasse 159
D-5650 Solingen 1 (DE)

Jouve, 18, rue St-Denis, 75001 Paris, France

**Beschreibung**

Die Erfindung bezieht sich auf eine Sonnenblende für Fahrzeuge mit einem Sonnenblendenkörper, der von einer als Rohr ausgebildeten Achse getragen wird und der einseitig eine Ausnehmung aufweist, in der ein Spiegel und zumindest eine Lichtquelle untergebracht sind, wobei an der Lichtquelle elektrische Verbindungsleitungen angeschlossen sind, von denen zumindest eine durch die Achse hindurchgeführt und mit dem Stromversorgungsnetz des Fahrzeuges verbindbar ist.

Fahrzeugsonnenblenden, die mit einem Spiegel und mit einer Beleuchtungseinrichtung ausgerüstet sind, erfreuen sich zunehmender Beliebtheit. Derartige Sonnenblenden sind aber noch verhältnismäßig teuer, was insbesondere auch auf die elektrische Stromversorgung der Lichtquelle zurückzuführen ist, die einer relativ schwierig durchzuführenden Verkabelung bedarf. Eine besondere Schwierigkeit besteht darin, daß die elektrischen Leitungen die Umrißkontur des Sonnenblendenkörpers bei dessen Herstellung nicht überragen dürfen, wenn dieser mit einer aus Kunststoffolien bestehenden Umhüllung — wie es aber derzeit im allgemeinen der Fall ist — versehen werden soll ; denn die Leitungen würden das umlaufende randseitige Verschweißen der Kunststoffolienzuschnitte behindern. Aus diesem Grunde werden die aus der Achsenaufnahme heraustretenden Endbereiche der im Sonnenblendenkörper eingebetteten Leitungen umgeknickt und in die Achsenaufnahme zurückgeführt und erst nach Fertigstellung der Umhüllung wieder aus der Achsenaufnahme herausgezogen. Sowohl das Einstecken der Leitungsenden in die Achsenaufnahme als auch das Wiederherausziehen der Leitungsenden aus der Achsenaufnahme läßt sich nur durch kostenintensive Handarbeit bewerkstelligen. Weiterhin können nur relativ kurze Endabschnitte von Verbindungsleitungen vorübergehend in der Achsenaufnahme untergebracht werden mit dem Nachteil, daß dann, wenn Sonnenblenden mit längeren Verbindungsleitungen erwünscht sind, zusätzliche Leitungsverbinder bereitgestellt und angeschlagen werden müssen, was aber verständlicherweise mit weiteren zusätzlichen Kosten verbunden ist.

Sonnenblendenkörper bestehen im allgemeinen aus einem zum Beispiel als Drahtrahmen ausgebildeten Versteifungskörper, der beidseitig mit Kunststoffschaumzuschnitten belegt ist, die ihrerseits mit einer Hüllfolie umkleidet sind. In einem Eckbereich des Drahtrahmens ist ein Lagergehäuse mit einer Achsenaufnahme angeordnet. Daneben werden in zunehmendem Maße Sonnenblenden eingesetzt, bei denen der Versteifungskörper mit Kunststoffschaum umschäumt und der so gebildete Rohling ebenfalls mit einer Hüllfolie umkleidet wird. Damit die Achsenaufnahme beim Schäumen des Sonnenblendenkörpers schaumfrei bleibt, ist während des Schäumvorganges ein herausziehbarer Kern im Lagergehäuse angeordnet, so daß später die Achse ohne bonsondere Nacharbeit in die Achsenaufnahme eingesteckt werden kann. Bei solchen geschäumten Sonnenblenden ist die Leitungsführung besonders schwierig, weil sich durch die Leitungen neben den geschilderten Nachteilen innerhalb des Lagergehäuses noch Abdichtunsprobleme während des Schäumprozesses ergeben.

Es ist zwar bekannt (vergleiche DE-A-27 03 447), die Verbindung der Lichtquelle einer Fahrzeugsonnenblende mit dem Stromversorgungsnetz eines Fahrzeuges über das sogenannte Gegenlager, über das eine Sonnenblende üblicherweise verfügt, und dem zugehörigen an der Fahrzeugkarosserie befestigten Gegenlagerböckchen herzustellen, jedoch entspricht eine solche Verbindung, die gewisse Vorteile hinsichtlich der Leitungsführung innerhalb des Sonnenblendenkörpers hat, wegen der erforderlichen fahrzeugseitigen Anpassung oftmals nicht den Wünschen der Fahrzeughersteller.

Eine Sonnenblende mit den Merkmalen des Oberbegriffs des Anspruchs 1 ist in der FR-A-2 318 046 beschrieben. Bei dieser Sonnenblende, deren Sonnenblendenkörper aus zwei über ein Gelenk miteinander verbundenen Schalen zusammengesetzt ist, ist als Achse ein L-förmiges Halterungsteil vorgesehen, dessen im Sonnenblendenkörper eingelagerter Schenkel eine Stange trägt, die in einer entsprechenden Öffnung im Kern des Sonnenblendenkörpers drehbar gelagert ist. Das L-förmige Halterungsteil und die Stange sind allgemein rohrförmig und nehmen eine elektrische Leitung auf, die an eine Stromquelle im Fahrzeug angeschlossen werden kann und deren anderes Ende sich im Hohlraum des im allgemeinen als Hohlkörper ausgebildeten Sonnenblendenkörpers befindet. Mit dem L-förmigen Halterungsteil ist ein gesonderter Erdungsleiter verbunden, der sich durch eine Öffnung des Blendenkörpers erstreckt, und dessen Ende ebenfalls in dem Hohlraum des Sonnenblendenkörpers angeordnet ist.

Die erfindungsgemäße Sonnenblende zeichnet sich gegenüber dem aufgezeichneten Stand der Technik dadurch aus, daß der Sonnenblendenkörper einen ein Hindurchführen zumindest einer Verbindungsleitung ermöglichenden aus einem Rohr- oder Schlauchabschnitt bestehenden Verbindungskanal zwischen dem innerhalb des Sonnenblendenkörpers befindlichen Ende der Achse und der Ausnehmung aufweist.

Durch diese erfindungsgemäßen Maßnahmen kann verteilhafterweise die Verkabelung zu einem Zeitpunkt vorgenommen werden, bei dem der Sonnenblendenkörper bereits mit einer Hüllfolie umkleidet und mit einer Achse bestückt ist und bei dem die Montage des Spiegels und der Lichtquelle unmittelbar bevorsteht. Dabei wird zumindest eine Verbindungsleitung von der Ausnehmung her, in der ja ein Kanalende mündet, mit einem Ende voran, durch den Verbindungskanal und weiter durch die rohrförmige Achse geschoben. Natürlich besteht auch die Möglichkeit, die Verbindungsleitung in das freie Achsende einzuschieben und so lange weiterzuschieben, bis das Ende sich in der Ausnehmung befindet ; denn allein wesentlich ist, daß für die Verbindungsleitung eine Zwangsführung innerhalb des Sonnenblendenkörpers besteht, die ihr nachträgliches Einziehen ohne jegliche Hilfsmittel ermöglicht. Die Erfindung kann vorteilhafterweise sowohl bei Sonnenblenden, deren Sonnenblendenkörper aus in einer Umhüllung angeordneten Schaumstoffzuschnitten bestehen als auch bei Sonnenblenden mit geschäumten· Sonnenblendenkörpern verwirklicht werden, wobei jeweils den Wünschen der Abnehmerschaft in bezug auf bestimmte Kabellängen entsprochen werden kann.

Der Gegenstand der Erfindung wird nachfolgend anhand der Zeichnung beispielhaft erläutert. Es zeigen

Figur 1 eine komplette Sonnenblende und

Figur 2 dieselbe Sonnenblende in einer teilweise weggebrochenen Darstellung und mit einer schematisch angedeuteten Beleuchtungseinrichtung.

Die Sonnenblende besteht aus einem angenähert rechteckigen, plattenförmigen Sonnenblendenkörper 1, der in einem Eckbereich seiner oberen Längskante eine darin eingelagerte Achse 2 trägt, welche mit einem an einer Fahrzeugkarosserie befestigbaren Lagergehäuse 3 verbunden ist. Die Achse 2 ist L-förmig ausgebildet, wobei ein Schenkel im Sonnenblendenkörper und der andere Schenkel im Lagergehäuse 3 gelagert ist. Im Bereich des anderen Eckbereichs der oberen Längskante ist der Sonnenblendenkörper 1 mit einer Gegenlagerachse 4 ausgebildet, welche lösbar in einem an der Fahrzeugkarosserie befestigbaren Gegenlager 5 sitzt.

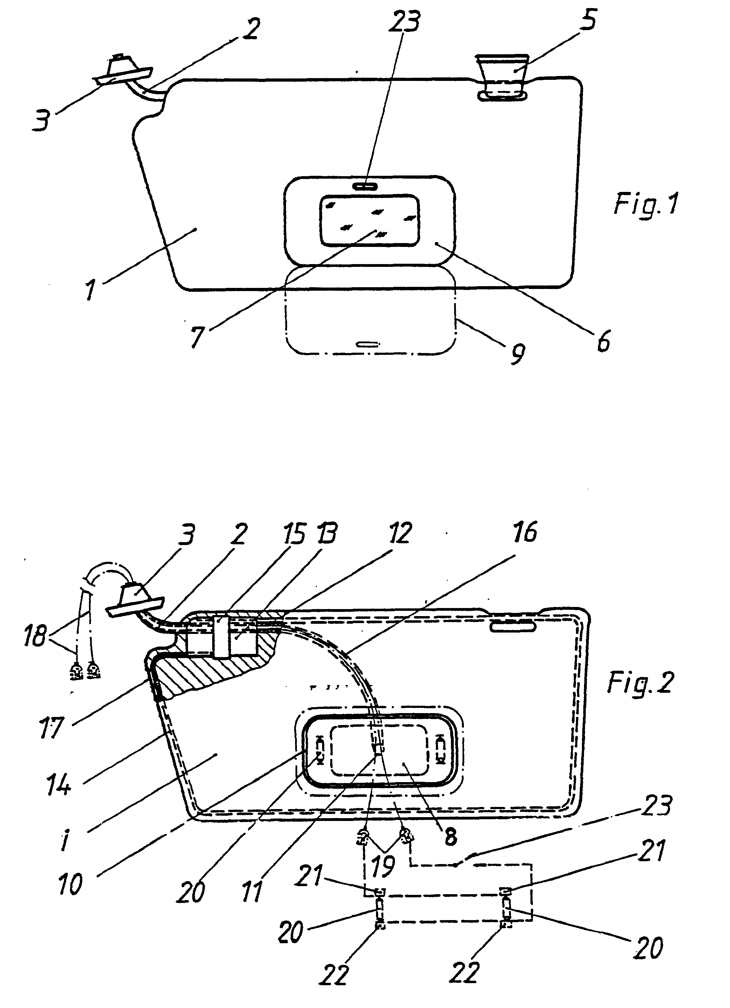

Wie aus Fig. 1 ersichtlich ist, ist die Sonnenblende mit einem in einem Rahmen 6 angeordneten Spiegel 7 ausgerüstet, wobei die Rahmen — Spiegeleinheit in einer hierfür im Sonnenblendenkörper 1 vorgesehenen Ausnehmung 8 befestigt ist. An dem Rahmen 6 kann, wie mit strichpunktierten Linien angedeutet, eine Spiegelabdeckklappe 9 angelenkt sein.

In die Ausnehmung 8 des Sonnenblendenkörpers 1 ist eine etwa rechteckige Kunststoffwanne 10 eingesetzt. Die Kunststoffwanne 10, die die Rahmen-Spiegel-Einheit 6, 7 und eine noch zu beschreibende Beleuchtungseinrichtung trägt, weist in einer Seitenwandung oder — wie dargestellt — im Boden eine Öffnung 11 auf, welche von dem Endbereich eines Schlauch- oder Rohrabschnittes 12 durchsetzt ist. Dieser Schlauch- oder Rohrabschnitt 12, der im Sonnenblendenkörper 1 durch Einlegen oder Umschäumen eingebettet ist, erstreckt sich von der Öffnung 11 bis zum innerhalb des Sonnenblendenkörpers 1 befindlichen Ende der als Rohr ausgebildeten Achse 2, die in einem Lagergehäuse 13 angeordnet ist. Das Lagergehäuse 13 ist mit einem den Sonnenblendenkörper 1 aussteifenden Drahtrahmen 14 verbunden und trägt eine die Achse 2 radial beaufschlagende Feder 15, durch die der Sonnenblendenkörper 1 in der jeweiligen Klapplage gehalten wird. Der Schlauch- oder Rohrabschnitt 12 bildet einen Verbindungskanal 16 innerhalb des Sonnenblendenkörpers 1, und zwar, wie vorstehend erwähnt, zwischen dem einen Ende der Achse 2 und der Öffnung 11 in der Kunststoffwanne 10. Durch diesen Verbindungskanal 16 ist die Möglichkeit gegeben, den Sonnenblendenkörper 1, nachdem er mit einer Hüllfolie 17 umschweißt und mit der Achse 2 bestückt ist, nachträglich mit Verbindungsleitungen 18 auszurüsten, wie dies in Fig. 2 strichpunktiert angedeutet ist. Dabei werden die Kabelschuhe 19 natürlich erst dann an die entsprechenden Enden der Verbindungsleitungen 18 angeschlagen, wenn diese durch die Achse 2, den Rohr- oder Schlauchabschnitt 12 und durch die Öffnung 11 hindurch geführt worden sind.

Die Verbindungsleitungen 18 dienen dazu, die in der Ausnehmung 8 angeordneten Soffittenlampen 20 mit elektrischem Strom zu versorgen und sind daher mit dem Stromversorgungsnetz eines Fahrzeuges verbindbar. Die aus der Öffnung 11 heraustretenden Enden der Verbindungsleitungen 18 sind jeweils mit die Soffittenlampen 20 tragenden Kontakten 21 bzw. 22, wie dies in Fig. 2 mit gestrichelten Linien verdeutlicht ist, verbunden. In der einen Zuleitung ist ein Schalter 23 vorgesehen, der, vergleiche auch Fig. 1, zum Beispiel durch die Spiegelabdeckklappe 8 betätigt werden kann.

Die Kontakte 21, 22 nebst ihrer Verbindungen, Schalter 23 und Lampen 20, bilden mit dem aus lichtdurchlässigem Kunststoffmaterial bestehenden Rahmen 6 und dem darin eingesetzten Spiegel 7 zweckmäßigerweise eine Baueinheit. Das bedeutet, daß bei der Endmontage der Sonnenblende lediglich die Verbindungsleitungen 18 durch den Verbindungskanal 16 geschoben und an die Baueinheit angeklemmt werden brauchen, und daß dann die Baueinheit lediglich noch in die Kunststoffwanne 10 einzuklipsen ist.

Die Achse 2 und der Schlauch- oder Rohrabschnitt können aus Metall bestehen und miteinander, wie auch mit der Fahrzeugkarosserie kontaktieren. In diesem Fall braucht durch den Verbindungskanal 16 nur die gegenüber Masse Spannung führende Verbindungsleitung 18 dürchgeführt und einer der Kontakte 21 oder 22 kontaktbildend an dem Schlauch- oder Rohrabschnitt 12 angelegt zu werden.

**Patentansprüche**

1. Sonnenblende für Fahrzeuge mit einem Sonnenblendenkörper (1), der von einer als Rohr ausgebildeten Achse (2) getragen wird und der einseitig eine Ausnehmung (8) aufweist, in der ein Spiegel (7) und zumindest eine Lichtquelle (20) untergebracht sind, wobei an der Lichtquelle (20) elektrische Verbindungsleitungen (18) angeschlossen sind, von denen zumindest eine durch die Achse (2) hindurchgeführt und mit dem Stromversorgungsnetz des Fahrzeuges verbindbar ist, dadurch gekennzeichnet, daß der Sonnenblendenkörper (1) eine ein Hindurchführen zumindest einer Verbindungsleitung (18) ermöglichenden aus einem Rohr- oder Schlauchabschnitt (12) bestehenden Verbindungskanal (16) zwischen dem innerhalb des Sonnenblendenkörpers (1) befindlichen Ende der Achse (2) und der Ausnehmung (8) aufweist.

2. Sonnenblende nach Anspruch 1, dadurch gekennzeichnet, daß der Rohr- oder Schlauchabschnitt (12) im Sonnenblendenkörper (1) eingebettet ist.

## Claims

1. A sun visor for vehicles, the visor comprising a visor body (1) arranged to be supported by a tubular shaft (2) and having at one of its main faces a recess (8) accommodating a mirror (7) and at least one source of light (20) connected to electric conductors (18) at least one of which passes through the shaft (2) and is connectable to the vehicles electric circuit, characterized in that the visor body (1) is provided with a length (12) of a tube or hose permitting at least one of the electric conductors (18) to pass therethrough and constituting a connecting passage (16) between that end of the shaft (2) that is located within the visor body (1) and the latter's recess (8).

2. A sun visor according to claim 1, characterized in that the length (12) of the tube or hose is embedded in the visor body (1).

## Revendications

1. Pare-soleil comprenant un corps (1) supporté par un axe (2) constitué sous forme d'un tube, le corps présentant sur un côté un évidement (8), dans lequel sont montés un miroir (7) et au moins une source lumineuse (20), des conducteurs de liaison électriques (18) étant raccordés à la source lumineuse (20), dont l'un au moins passe par l'axe (2) et peut être relié au réseau d'alimentation de courant du véhicule, caractérisé en ce que le corps (1) du pare-soleil comprend un canal de liaison (16) sous la forme d'une section de tube ou de tuyau (12) disposé entre l'extrémité de l'axe (2) se trouvant à l'intérieur du corps du pare-soleil et l'évidement (8), qui permet le passage d'au moins un conducteur de liaison (18).

2. Pare-soleil selon la revendication 1, caractérisé en ce que la section de tube ou de tuyau (12) est noyée dans le corps (1) du pare-soleil.

Fig.1

Fig.2